Europäisches Patentamt

European Patent Office

Office européen des brevets

(11) Veröffentlichungsnummer: **0 141 778**
**B1**

(12) **EUROPÄISCHE PATENTSCHRIFT**

(45) Veröffentlichungstag der Patentschrift:
**09.03.88**

(21) Anmeldenummer: **84810434.5**

(22) Anmeldetag: **07.09.84**

(51) Int. Cl.⁴: **B 05 B 15/04,** B 05 B 15/12,
B 05 B 5/08

(54) **Elektrostatische Pulverbeschichtungsanlage.**

(30) Priorität: **08.09.83 CH 4904/83**
**29.11.83 CH 6366/83**

(43) Veröffentlichungstag der Anmeldung:
**15.05.85 Patentblatt 85/20**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**WO - A - 81/02117**
**DE - A - 2 546 920**
**DE - A - 3 028 588**
**US - A - 4 245 551**

(73) Patentinhaber: **Ribnitz, Peter, Dipl.-Ing.,**
**Haselstrasse 15, CH-9013 St. Gallen (CH)**

(72) Erfinder: **Ribnitz, Peter, Dipl.-Ing., Haselstrasse 15,**
**CH-9013 St. Gallen (CH)**

(74) Vertreter: **Troesch, Hans Alfred, Dr. Ing. et al,**
**Walchestrasse 19, CH-8035 Zürich (CH)**

## Beschreibung

Die vorliegende Erfindung betrifft eine elektrostatische Pulverbeschichtungsanlage mit einer Beschichtungskabine und einer Pulverrückgewinnungseinrichtung, welche eine Filtereinrichtung, eine Siebmaschine, einen Abluftventilator, einen mindestens teilweise fluidisierenden Boden, ein Pulverabsaugelement aufweist, um das durch die Siebmaschine ausgesiebte Pulver wiederverwendbar abzuführen, wobei bei entsprechender Kombination das Sieb und die Filtereinrichtung im gleichen umbauten Raum angeordnet sind und die Pulverrückgewinnung mindestens in Teilen auswechselbare Einheiten aufweist.

Bei der elektrostatischen Pulverbeschichtung stellen die Kompliziertheit und die hohen Investitionen für die Rückgewinnungssysteme Hindernisse für die Verbreitung dieses Verfahrens dar. Solche Systeme sind z.B. im US-Patent 4 245 551, in der DE-A-2 546 920 oder in der DE-A 3 028 588 beschrieben. Es zeigt sich dabei, dass das Absaugen, die Siebung und die Rückführung des Pulvers sehr aufwendig und teuer sind.

Die gleiche Problematik ergibt sich bei der direkten Absaugung des Pulvers bei Beschichtungsverfahren für spezielle Anwendungen, z.B. bei der Dosennahtbeschichtung. In den bisher angewendeten Systemen wurde das abgesaugte Pulver in einem Filter aus der Luft abgeschieden und fiel dann auf den Boden des Filtergehäuses. Von dort wurde es entweder mittels einer Zwischenförderung über einen Minizyclon und eine Zellenradschleuse oder über Quetschventile der Siebmaschine zugeführt. Von dort gelangte das gereinigte Pulver direkt in den Pulverbehälter.

Beim elektrostatischen Pulverbeschichten in einer Kabine ist heute immer noch eines der grössten Probleme, dass die meisten dieser Systeme komplex sind und beim Farbwechsel zuviel Zeit verlorengeht. Solche im Aufbau komplizierten Systeme sind z.B. in der DE-A-2 546 920 oder im US-Patent 4 245 551 beschrieben.

Bei der Anlage gemäss dem US-Patent ist symptomatisch, dass beim Farbwechsel die ganze Filtereinheit ausgetauscht werden muss. Diese Filter sind teuer und benötigen pro Farbe ein vollständiges Absaugsystem, somit viel Platz. Der Austausch der Filtereinheit, normalerweise in Form von Taschenfiltern oder Patronenfiltern, ist schwierig. Zudem wird dann immer noch pro Farbe eine Baueinheit benötigt.

Gemäss der DE-A ist es so, dass die Filterbänder pro Farbe gewechselt werden müssen. Dazu sind zwei Personen notwendig. Die Filterbänder müssen im übrigen getrennt gelagert werden. In vielen Fällen ist es so, dass noch die Absaugeinheit zwei- oder mehrfach vorhanden ist, um die Farbwechselzeiten möglichst niedrig zu halten.

Es ist ferner eine Vorrichtung zum Pulverbeschichten von Werkstücken mit einer das Werkstück zeitweise aufnehmenden Sprühkabine bekannt geworden (WO 81/02117). Diese Vorrichtung ist mit einer Reingaseinheit mit Sauggebläse versehen, das an der Oberseite einer fahrbaren Pulversprühkabine befestigt ist. Zur Vorrichtung gehört ferner eine für sich fahrbare Pulvereinheit mit einer Filtereinheit und einer an dieser aufgehängten Aufbereitungseinheit. In der Sprühkabine wird mittels einer elektrostatischen Sprühpistole Beschichtungspulver aus einer Sprühöffnung auf das Werkstück versprüht. Zwischen dem Sprühraum und dem Filteraggregat ist in einer grossflächigen Kabinenöffnung ein Schutzgitter angebracht. Beim Sprühvorgang ergibt sich eine gleichgerichtete Luftströmung in Sprührichtung durch den ganzen Sprühraum hindurch. Dieser Luftstrom fördert nicht am Werkstück haftengebliebene Pulverpartikel und trägt sie zum Filteraggregat hin. Aus diesem gelangt das Pulver ebenso wie von einem schrägen Boden über eine Siebmaschine in den Pulverbehälter. Dabei kann mittels Schnellkupplungen wahlweise das ganze Pulveraggregat oder dessen Einheiten leicht ausgewechselt werden.

Diese Vorrichtung ist mit einer Siebmaschine versehen, welche die groben, nicht mehr verwendbaren Pulverteilchen und Unreinigkeiten zurückhält, während das wiederverwendbare Pulver mittels eines Ejektors ausgetragen wird. Ein kontinuierliches Arbeiten dieser Anlage wird dadurch verunmöglicht, dass kein Abtransport der ausgesiebten Grobteilchen und Unreinigkeiten möglich ist, ohne die Anlage abzustellen. Es ist aber bekannt, dass ein kontinuierliches Arbeiten derartiger Vorrichtungen qualitätsfördernd ist und zudem eine optimale Ausnützung an und für sich teurer Vorrichtungen ermöglicht.

In diesem Sinne ist das Ziel der vorliegenden Erfindung die Schaffung einer elektrostatischen Pulverbeschichtungsanlage, die mit einer Pulverrückgewinnungseinrichtung versehen ist und ermöglicht, ausschliesslich wiederverwendbares, qualitativ erstklassiges Pulver in die Sprühanlage zurückzufördern, wobei die Pulverrückgewinnungsanlage einen sicheren Betrieb mit minimalen Stillstandszeiten garantieren soll.

Eine derartige elektrostatische Pulverbeschichtungsanlage zeichnet sich durch den Wortlaut des Anspruchs 1 aus.

In diesem Sinne ist man ferner bestrebt, eine wesentliche bauliche Vereinfachung einer solchen Anlage zu erreichen. Dabei geht es vor allem um die Elimination von störanfälligen Elementen. Zellenradschleusen, die mit Pulver beaufschlagt gerne festfressen, oder Quetschventile, die einen hohen Gummiverschleiss haben und zum Zusammenbacken des Pulvers führen, verhindern oft ein einwandfreies Arbeiten. Die Zwischenförderung benötigt zusätzliche Pressluft und besitzt Verschleissteile. Der Pulverbehälter verbraucht ebenfalls Energie und Platz.

Die Erfindung wird anschliessend beispielsweise anhand einer Zeichnung erläutert.

Es zeigen in rein schematischer Darstellung:

Fig. 1 eine elektrostatische Pulverbeschichtungsanlage mit Rückgewinnungsanlage, mit abgehobenen Seitenwänden,

3 0 141 778 4

Fig. 2 einen Ausschnitt aus einer Anlage analog Fig. 1, mit farbspezifischen Abscheidern,

Fig. 3 den unteren Teil der Kabine gemäss Fig. 1, in geänderter Ausführung,

Fig. 4 eine Seitenansicht der Rückgewinnungsanlage aus Fig. 1, mit abgehobener Vorderwand,

Fig. 5 einen Schnitt durch einen Anlageteil gemäss Linie A-A der Fig. 1.

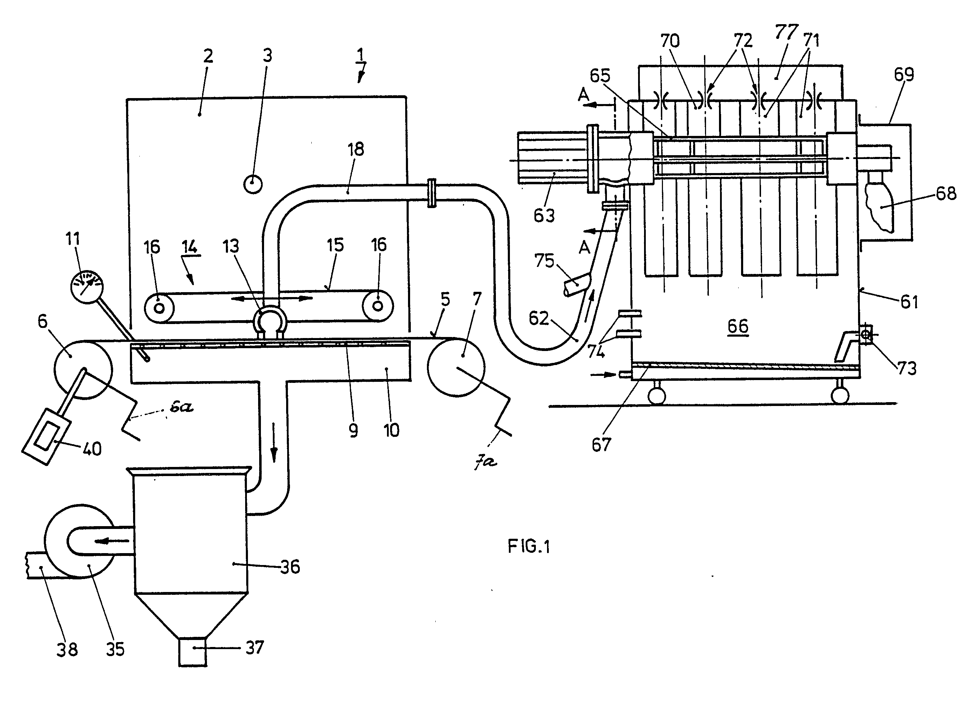

In der schematisch dargestellten elektrostatischen Pulver-Beschichtungsanlage gemäss Fig. 1 sind nur die in Zusammenhang mit der vorliegenden Erfindung interessierenden Teile wiedergegeben. Die dargestellte Pulver-Beschichtungsanlage 1 ist mit einer Kabine 2 ausgerüstet, in welcher mittels einer Pistole 3 die Farbteilchen in bekannter Weise auf den zu beschichtenden Gegenstand aufgesprüht werden. Im unteren Teil der Kabine 2 befindet sich ein Filterband 5, welches über zwei Walzen 6 und 7 gespannt ist, welche Walzen mit einem entsprechenden Antrieb (nicht dargestellt) versehen sind. Über dem Boden, unterhalb des Filterbandes 5, befindet sich ein Stützgitter 9. Der unter diesem liegende Teil der Kabine 2 wird als Trog 10 bezeichnet. Ein Differenzdruckmesser 11 misst den in diesem Trog 10 herrschenden Unterdruck bei Betrieb. Der Unterdruck dient als massgebende Grösse für die Regelung der Anlage.

Am Boden des Troges 10 ist ein grossflächig ansaugender Saugventilator 35 angebaut, dem eine Feinfilteranlage 36 sowie ein Staubsammler 37 vorgeschaltet sind. Die gereinigte Luft entweicht durch eine Abluftleitung 38.

Ein Zähler 40 erlaubt die Lage des Filterbandes 5 festzuhalten.

Über dem Filterband 5 und mit diesem in enger Berührung, befindet sich eine Absaugdüse 13, die an einem Düsenschiebeantrieb 14 befestigt ist. Der Antrieb umfasst ein Band bzw. eine Kette 15, mit zwei Umlenkrollen 16, welche angetrieben sind und erlauben, die Absaugdüse 13 wunschgemäss in der Kabine 2 über das Filterband 5 hin und her zu führen, bzw. auch während des Beschichtungsbetriebes an einer bestimmten Stelle anzuhalten. Die Absaugdüse 13 ist über einen Schlauch 18, der sich im Betrieb entsprechend dem Standort der Absaugdüse 13 faltet, an eine Rückgewinnungsanlage angeschlossen.

Die in Fig. 1 dargestellte Konstruktion zeigt, wie sich eine wesentliche Vereinfachung einer Rückgewinnungsanlage erzielen lässt: Bemerkenswert daran sind vor allem die erzielte bauliche Kleinheit und der Wegfall diverser Elemente bei gleichen Abscheidungs-Charakteristiken und Wirkungsgraden.

Die als auswechselbare Baueinheit konzipierte Rückgewinnungsanlage gemäss der Ausführung nach Fig. 1 besteht aus einem Grundrahmen 61, in welchem die weiteren Elemente eingebaut sind. Das Pulver-Luftgemisch wird über eine Leitung 62 einer Siebmaschine 63 mit einem Siebkorb 65 zugeführt. Die Siebmaschinenachse wird vorteilhafterweise ca. 5–10° geneigt. Dabei ist ein tangentialer Lufteintritt von Vorteil. Der Abluft-

Ventilator 64 saugt die gefilterte Luft aus dem Luftkollektor 77 und stösst diese durch die Abluftleitung 78 ins Freie aus. Damit fällt der bei Siebmaschinen übliche Schneckenförderer weg, wodurch ein weiteres Störelement entfällt und der Preis gesenkt werden kann. Da die Siebmaschine direkt in einen Pulverbehälter 66 eingebaut ist, fällt das gereinigte Pulver direkt auf einen fluidisierenden Boden 67 und kann sogleich weiterverwendet werden. Auf der gegenüberliegenden Seite des Pulvereintritts ist in der Siebmaschine 63 ein Schmutzauffangbehälter 68 angebracht, der die im Siebkorb nicht ausgesiebten Schmutzteile im Pulver auffängt. Damit für die Siebmaschine 63 gleiche Druckverhältnisse vorhanden sind, wird der Schmutzsack über ein dichtes, schnell abnehmbares Gehäuse 69 gegenüber der Umgebung abgedichtet. Durch Abnehmen dieses Gehäuses 69 ist eine schnelle Reinigung und Austausch des Siebkorbes 65 möglich. Der Siebkorb 65 wird mit Schnellverschlüssen und Gummipuffern fixiert. Dies erleichtert die Wartung wesentlich. Neben der Siebmaschine 63 wird im Oberteil des Gehäuses eine Filterbatterie 70 angeordnet. Es entsteht somit ein gemeinsamer Raum mit gleichem Druck für Siebmaschine und Filter. Die Anzahl der Filterpatronen 71 der Batterie 70 richtet sich nach der zu verarbeitenden Luftmenge. Die Lage der Patronen 71 kann auch horizontal sein. Der Einbau wird üblicherweise so gewählt, dass das Gehäusevolumen möglichst gering wird. Selbstverständlich können anstelle der Filterpatronen auch Taschenfilter verwendet werden.

Die Filterbatterie 70 scheidet aus dem im Raum befindlichen, aus dem Siebkorb 65 austretenden und durch die Fluidisierung aufgewirbelten Pulver-Luft-Gemisch das Pulver ab. Düsen 72 blasen Pressluft entgegen der normalen Luftdurchströmrichtung zyklisch oder druckabhängig in eine oder mehrere Patronen 71, so dass nach bekannter Art eine Reinigung der Patronen erfolgt. Das Pulver fällt auf den Boden 67 und ist sofort für das Weiterverwenden verfügbar. Der Boden 67 wird aus porösem Material hergestellt, so dass eine Fluidisierung des Pulvers erreicht werden kann. Der Boden 67 ist leicht geneigt (5–10°), damit an einer Seite ein oder mehrere Saugdüsen 73 angeschlossen werden können und das Pulver dem Boden 67 entnommen wird. Die maximale Pulverhöhe kann mittels Niveausonden 74 kontrolliert werden. Die Frischpulverzufuhr kann über einen Anschlussstutzen 75 direkt in die Absaugleitung 62 erfolgen. Der Vorteil dieses Verfahrens besteht darin, dass das Frischpulver ebenfalls bereits gesiebt wird. Dessen manuelle Einfüllung über eine Einfüllklappe 76 ist ebenfalls möglich.

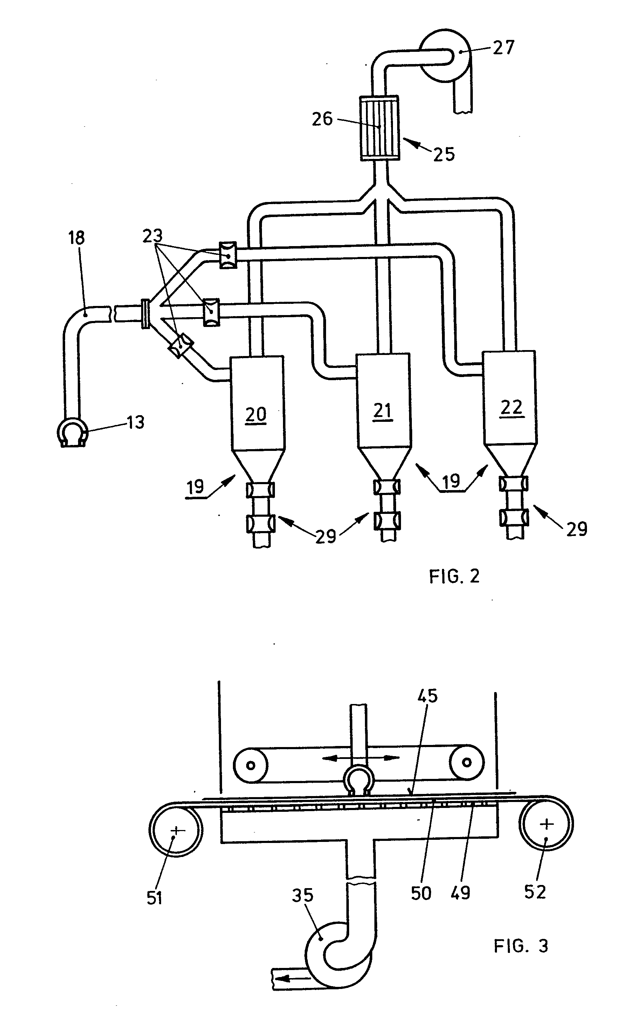

Wie Fig. 2, eine weitere Möglichkeit einer Rückgewinnungsanlage, zeigt, dienen entsprechende Quetschventile 23 dazu, jeweils die gewünschte, in den Zyklonabscheidern 20, 21, 22 abgelagerten, unterschiedlichen Farben mit der Absaugdüse 13 zu verbinden, damit entsprechend dem Betrieb die richtigen Förderwege of-

3

fenstehen, um die beim Spritzen auf das Filterband 5 gefallenen Farbteilchen in den richtigen Zyklon zu führen und dort abzuscheiden.

Nach den Zyklonen der Staubabscheiderbatterie 19 ist ein Feinfilter 25 eingebaut mit Filterpatronen 26 und diesen nachgeschaltet, ein Abluftventilator 27, welcher die im Feinfilter 25 praktisch vollständig gereinigte Luft in die Atmosphäre ausstösst.

Unterhalb jedem Zyklonabscheider der Staubabscheiderbatterie 19 befindet sich eine Pulverschleuse 29, welche im dargestellten Falle aus zwei Quetschventilen aufgebaut ist. Unter der Schleuse ist eine Siebmaschine mit einem anschliessenden Sammelbehälter für die abgeschiedenen, wiederverwendbaren Farbteilchen vorgesehen (nicht dargestellt).

Im Betrieb einer möglichen elektrostatischen Pulverbeschichtungsanlage 1 (linker Teil der Fig. 1) kann zu jeder Farbe ein gewisser Bandabschnitt des Filterbandes 5 zugeteilt werden sowie beispielsweise ein zugehöriger Zyklonabscheider in der Rückgewinnungsanlage (Fig. 2). Wenn die Farbe gewechselt wird, wird das Filterband 5 um mindestens die Länge der Kabine 2 weiter bewegt, so, dass entweder ein ungefärbter Teil des Filterbandes 5 in der Kabine 2 liegt oder ein mit der nächsten Farbe besprühter Teil des Filterbandes. Entsprechend dieser Farbe wird auch einer der Zyklone 20, 21, 22 usw. der Staubabscheiderbatterie 19 zum Einsatz kommen, wozu das entsprechende Quetschventil 23 geöffnet und das bisherige geschlossen wird. Auch die Quetschventile 29 und die darunter vorgesehenen, nicht dargestellten Filter und Behälter sind farbspezifisch jedem Zyklonabscheider zugeordnet, ebenso die Filterpatronen des Feinfilters 25. Bei Änderung der Farbe ist es mithin nur nötig, den Schlauch 18 und die Absaugdüse 13 entsprechend zu reinigen. Die übrigen Teile werden durch entsprechende Umsteuerung der Ventile farbspezifisch gewechselt.

Es hat sich auch gezeigt, dass die Absaugung mittels der Absaugdüse 13 nicht kontinuierlich vonstatten zu gehen braucht, sondern dass das Saugen nur diskontinuierlich, d.h. intermittierend, und mithin energiesparend, erfolgen kann.

Auf diese Weise ist es auch möglich, das Feinfilter 25 während des Arbeitens automatisch oder manuell zu reinigen und damit den guten Abscheidungsgrad bei entsprechend niedrigen Druckverlusten in der Filterpatrone 26 aufrechtzuerhalten.

Durch zonenweises farbwechselbedingtes Vorwärtsbewegen des Filterbandes 5 kann dieses maximal ausgenützt werden, wobei dessen Aufbau, da das untere Rückführzentrum fehlt, besonders einfach wird.

Sobald der Druckmesser 11 gegenüber dem oberen Teil der Kammer einen Unterdruck von ca. 100 bis 120 mm WS aufweist, zeigt dies an, dass das Filterband 5 bzw. dessen entsprechender Abschnitt mit Farbpartikeln gesättigt ist und daher dieser Abschnitt des Filterbandes gereinigt werden muss.

Der grosse Vorteil einer derartigen Filterbandeinrichtung liegt darin, dass, da das Tuch seitlich auf den zwei Walzen 6 und 7 aufgewickelt ist, es beim Farbwechsel leicht wird, entweder manuell oder automatisch über das Zählwerk 40 die Fläche des entsprechenden Farbtones zu finden. Auf diese Weise hat sich auch das Absaugsystem wesentlich vereinfacht. Es ist nicht mehr nötig, ein kontinuierliches Reinigungssystem vorzusehen, da beim Reinigen des Filters 25 kein Pulververlust entsteht, obwohl kurzzeitig (ca. 7 sec) kein Pulver vom Band abgesaugt wird.

Ein weiterer Vorteil dieser Anlage besteht darin, dass die Reinigung des Bandes 5 über den Differenzdruckmesser gesteuert werden kann. Dabei ist es wichtig, dass in der Kabine selbst ungefähr ein konstanter Druck herrscht, indem die durch den Ventilator 35 abgesaugte Luftmenge ungefähr konstant und damit der Beschichtungsvorgang optimal und stationär vorgenommen werden kann. Die Lebensdauer des Filterbandes 5 wird auf diese Weise ebenfalls nachhaltig verlängert, im Gegensatz zu den konstant umlaufenden Filterbändern, wie sie der Stand der Technik offenbart. Das Wechseln des Rückführsystems entsprechend der zur Anwendung kommenden Farbe kann automatisch erfolgen, indem die Quetschventile, beispielsweise druckluftgesteuert, von der Lage des Filterbandes 5 abhängig, betätigbar sind. Die verschiedenen Farbzyklone sind in ihren Ausmassen klein, beispielsweise in der Grössenordnung von 1 m Höhe und 25 cm Durchmesser. Sie sind daher billig und gegebenenfalls leicht auszuwechseln. Die Feinabscheidung mit Tuchfiltern im Feinfilter 25 sichert den Abluftventilator 27 vor Unwucht infolge Ansetzens von Farbstaub, da diese Mengen viel zu klein sind, um diesbezüglich schädlich zu wirken.

Ein weiteres Problem stellt bei derartigen Anlagen die Tatsache, dass immer Flusen aus dem Filterband 5 durch die doch recht stark saugenden Absaugdüsen 13 mitgeführt werden und ein Abscheiden dieser Flusen von den Farbpartikeln ausserordentlich schwierig ist. Diesem Umstand trägt die Konstruktion, wie sie in Fig. 3 schematisch dargestellt ist, Rechnung.

Bei dieser Ausführung wird ein bandförmiges Oberflächenfilter 45 in die Kabine gespannt. Dieses Filter 45 hat den Vorteil, dass es keine Flusen abgibt und mit der Düse 13 sauber gereinigt werden kann, auch bei Farbwechsel. Unter dem Filter 45 befindet sich wiederum ein Stützgitter 49, wobei bei dieser Ausführung zwischen dem Filter 45 und dem Stützgitter 49 ein Vliesband 50 vorgesehen ist, welches über die zwei Walzen 51 und 52 verschoben bzw. auf- und abgerollt werden kann. Das Filter 45 ist luftdurchlässiger als das Filterband 5. Um das Vlies entsprechend bewegen zu können, sind die beiden Walzen 51 und 52 vorgesehen. Für den Betrieb bzw. das Wechseln des Vliesbandes 50 sind jeweils die auftretenden Unterdrücke, beispielsweise im Druckmesser 11, massgebend. Damit kann in der Kabine mit mehreren Farben gespritzt werden, ohne das Filter 45 herauszunehmen. Gleichzeitig dient das billige Vlies als Schutz für den Ventilator 35, und somit kann der Filter 36 ebenfalls wegfallen.

Im Betrieb herrscht am Mund der Absaugdüse 13 normalerweise ein Unterdruck zwischen 300 und 600 mm WS, wobei eine Luftmenge von 300 bis 500 m³/Std. durch den Abluftventilator 27 gelangt. Natürlich wird aus dem gröberen Filter 45 auch Pulver in das Vlies mitgesaugt, welches aber im Vliesband 50 hängenbleibt, so dass auch hier die Farbverluste in den bekannten Grenzen bleiben, zusätzlich aber die sonst in die Spritzpistole gelangenden Flusen ausgeschieden werden.

Die beschriebenen Anlageteile umgehen die eingangs erwähnten Nachteile der zum Stande der Technik gehörenden elektrostatischen Pulver-Beschichtungsanlagen.

Die beschriebene Rückgewinnungsanlage erlaubt es, diese als ganze Baueinheit auszutauschen oder sie an eine bestehende, z.B. an eine elektrostatische Pulverbeschichtungsanlage anzuschliessen.

Es ist aber auch möglich, die wesentlichen Verschleissteile, die mit leicht – z.B. ohne Werkzeug – lösbaren Verschlüssen versehen sind, auszuwechseln. Dazu gehören insbesondere der Pulverbehälter 66 mitsamt den Filterpatronen 71.

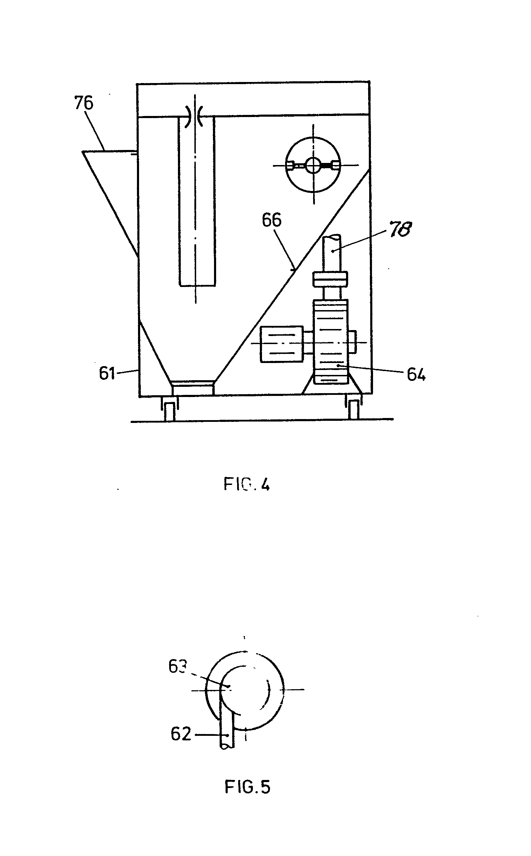

Die Pulverbeschichtungsanlage gemäss Fig. 1, linker Teil, kann sowohl mit einer stationären Pulverrückgewinnungsanlage (Fig. 2) als auch mit einer als Baueinheit austauschbaren Pulverrückgewinnungsanlage gemäss Fig. 1, rechter Teil, Fig. 4, betrieben werden.

**Patentansprüche**

1. Elektrostatische Pulverbeschichtungsanlage mit einer Beschichtungskabine und einer Pulverrückgewinnungseinrichtung, welche eine Filtereinrichtung (70, 71), eine Siebmaschine (63), einen Abluftventilator (64), einen mindestens teilweise fluidisierenden Boden (67), ein Pulverabsaugelement (73) aufweist, um das durch die Siebmaschine (63) ausgesiebte Pulver wiederverwendbar abzuführen, wobei bei entsprechender Kombination das Sieb (65) und die Filtereinrichtung (70, 71) im gleichen umbauten Raum (66) angeordnet sind und die Pulverrückgewinnung mindestens in Teilen auswechselbare Einheiten aufweist, dadurch gekennzeichnet, dass die Siebmaschine einen drehenden Siebkorb (65) aufweist, welchem zur Aufnahme nicht ausgesiebter Teilchen ein nach aussen abgedichteter Schmutzauffangbehälter (68) nachgeschaltet ist, wobei eine direkte Zuleitung (62) von einem pneumatischen Saugförderer (13) von Pulver aus der Beschichtungskabine (2) zum Siebkorb (65) vorgesehen ist und die Filtereinrichtung (70, 71) dem Siebkorb (65) derart nachgeschaltet ist, dass im wesentlichen von abgesiebtem Grobpulver befreite Luft zur Filtereinrichtung gelangt.

2. Anlage nach Anspruch 1, dadurch gekennzeichnet, dass der Eintritt der Zuleitung (62) in den Siebkorb (65) tangential erfolgt.

3. Anlage nach einem der Ansprüche 1 oder 2, dadurch gekennzeichnet, dass die Längsachse des Siebkorbes (65) in Richtung zum Schmutzauffangbehälter (68) hin geneigt ist.

4. Anlage nach einem der Ansprüche 1 bis 3, dadurch gekennzeichnet, dass die Anordnung derart vorgesehen ist, dass die Filterreinigung einzeln oder in Blöcken direkt im Siebmaschinen/-Filterraum erfolgen kann, wodurch ein kontinuierlicher Betrieb ermöglicht wird.

5. Anlage nach einem der Ansprüche 1 bis 4, dadurch gekennzeichnet, dass der Boden (67) des Siebmaschinen/Filterraumes aus porösem Material hergestellt und vorzugsweise geneigt ist.

6. Anlage nach einem der Ansprüche 1 bis 5, dadurch gekennzeichnet, dass Einzelaggregate, z.B. der Pulverbehälter (66), insbesondere ohne Werkzeughilfe, auswechselbar sind.

7. Anlage nach einem der Ansprüche 1 bis 6, dadurch gekennzeichnet, dass die Pulver-Abscheidemittel (63, 70) mitsamt dem Gebläse (64) als gesamthaft austauschbare Baueinheit ausgebildet sind, deren Austausch bei Farbwechsel des Pulvers vorgesehen ist (Fig. 4).

8. Anlage nach einem der Ansprüche 1 bis 7, bei welcher die Beschichtungskabine (2) eine Einrichtung (3) zur Abgabe von elektrostatisch aufgeladenem Pulver aufweist, mit einem im Innenraum der Kabine (2) bodenseitig angeordneten und durch die Kabine (2) bewegbaren Filterband (5), einem ersten Sauggebläse (35), das grossflächig im Bereich des Bodens der Kabine (2) angeschlossen ist und durch das Filterband (5) hindurch in der Kabine (2) einen Unterdruck erzeugt, sowie mit einer dem Filterband (5) zugeordneten Saugdüse (13) zur Entfernung des auf dem Filterband (5) liegenden überschüssigen Pulvers, gekennzeichnet durch Betätigungsmittel (6a, 7a), um bei Farbwechsel das stillstehende Filterband (5) um mindestens eine Kabinenlänge nachzuziehen und damit jeder Farbe ihre Filterbandzone zuzuteilen.

9. Anlage nach einem der Ansprüche 1 bis 8, dadurch gekennzeichnet, dass das Filterband (5) der Breite der Kabine (2) entsprechende, mehrere sich folgende Zonen aufweist, von welchen jede einer spezifischen Farbe zugeordnet ist.

10. Anlage nach einem der Ansprüche 1 bis 9, dadurch gekennzeichnet, dass die Saugdüse (13) einen Antrieb (14) aufweist, um sie längs des Filterbandes (5) zu bewegen.

11. Anlage nach einem der Ansprüche 1 bis 10, dadurch gekennzeichnet, dass Mittel vorgesehen sind, um während des Betriebes der Anlage deren Saugdüse (13) ausser Betrieb zu setzen.

12. Anlage nach einem der Ansprüche 1 bis 11, dadurch gekennzeichnet, dass unterhalb des Filterbandes (45) ein, vorzugsweise auf- und abrollbares, Vlies (50) angeordnet ist.

13. Anlage nach einem der Ansprüche 1 bis 12, dadurch gekennzeichnet, dass das Filterband (5) als ausserhalb des Sprühraumes der Kabine (2) beidseits aufgerolltes (6, 7), hin- und herbewegbares Band ausgebildet ist.

## Claims

1. Electrostatic powder-coating system comprising a coating enclosure and a powder recovery section with a filter unit (70, 71), a mechanical sieve (63), an exhaust fan (64), an at least partially fluidising floor (67), and a powder suction means (73) for removing the powder separated out by the mechanical sieve (63) for re-use, whereby if suitably combined, the sieve (65) and the filter unit (70, 71) are arranged in the same enclosed area (66) and whereby the powder recovery section comprises units which can be exchanged at least in parts, characterised in that the mechanical sieve has a rotary sieving basket (65) with an externally sealed dirt collector (68) arranged downstream for collecting any particles not separated out, whereby a direct supply pipe (62) is provided from a pneumatic powder suction conveyor (13) for feeding powder from the coating enclosure to the sieving basket (65), and the filter unit (70, 71) is arranged downstream of the sieving basket (65) such that air essentially free from sieved-out coarse powder enters the filter unit.

2. System according to claim 1, characterised in that the supply pipe (62) enters the sieving basket (65) tangentially.

3. System according to claims 1 or 2, characterised in that the longitudinal axis of the sieving basket (65) slopes in the direction of the dirt collector (68).

4. System according to claims 1 to 3, characterised in that the type of arrangement provided allows for individual or block filtering in the mechanical sieve/filter area itself, thus facilitating continuous operation.

5. System according to claims 1 to 4, characterised in that the floor of the mechanical sieve/filter area is constructed from porous material and is preferably sloping.

6. System according to claims 1 to 5, characterised in that individual units, such as the powder container (66) are exchangeable, in particular without the aid of tools.

7. System according to claims 1 to 6, characterised in that the powder separating means (63, 70) together with the fan (64) are constructed as one exchangeable unit, the exchange of which is envisaged when changing the colour of the powder (Fig. 4).

8. System according to claims 1 to 7, in which the coating enclosure (2) has a facility (3) for discharging electrostatically charged powder, comprising a filter belt (5) arranged near the floor inside the enclosure (2) and moving through the enclosure (2), a first large-area suction fan (35) connected in the floor area of the enclosure (2) and producing a negative pressure in the enclosure (2) through the filter belt (5), as well as a suction nozzle (13) assigned to the filter belt (5) for removing excess powder lying on the filter belt (5), characterised by actuating means (6a, 7a) for advancing the filter belt (5) stationary during a colour change by at least one enclosure length thus assigning a filter belt zone to each colour.

9. System according to claims 1 to 8, characterised in that the filter belt (5) has several successive zones corresponding to the width of the enclosure (2), each of which is assigned to a specific colour.

10. System according to claims 1 to 9, characterised in that the suction nozzle (13) has a drive (14) for moving it along the filter belt (5).

11. System according to claims 1 to 10, characterised in that means are provided for interrupting operation of the suction nozzle (13) whilst the plant is running.

12. System according to claims 1 to 11, characterised in that a fleece (50), preferably windable and unwindable, is arranged below the filter belt (45).

13. System according to claims 1 to 2, characterised in that externally to the spray enclosure (2) the filter belt (5) is constructed as a belt rolled up at both ends and movable to and fro.

## Revendications

1. Installation de revêtement électrostatique par poudre équipée d'une cabine de revêtement et d'un dispositif de récupération de poudre, comportant un dispositif de filtrage (70, 71), une machine à tamiser (63), un ventilateur aspirant (64), un fond (67) opérant au moins partiellement une fluidification, un organe aspirateur de poudre (73), afin d'évacuer de manière à pouvoir la réutiliser, la poudre tamisée par la machine à tamiser (63), dans laquelle, grâce à une combinaison appropriée, le tamis (65) et le dispositif de filtrage (70, 71) sont disposés dans la même enceinte fermée (65) et le dispositif de filtrage (70, 71) sont disposés dans la même enceinte fermée (66) et le dispositif de récupération de poudre comporte des unités remplaçables au moins par éléments, caractérisée en ce que la machine à tamiser comporte un panier de tamisage (65) rotatif à la suite duquel est intercalé un récipient collecteur d'impuretés (68) rendu étanche vis-à-vis de l'extérieur et destiné à recueillir des particules non tamisées, une conduite d'alimentation directe (62) étant prévue depuis un convoyeur pneumatique (13) aspirant de la poudre provenant de la cabine de revêtement (2) jusqu'au panier de tamisage (65), tandis que le dispositif de filtrage (70, 71) est intercalé à la suite du panier de tamisage (65) de telle façon que, pour l'essentiel, l'air libéré des grosses particules de poudre tamisées parvienne jusqu'au dispositif de filtrage.

2. Installation selon la revendication 1, caractérisé en ce que l'arrivée de la conduite (62) dans le panier de tamisage (65) se fait tangentiellement.

3. Installation selon l'une des revendications 1 ou 2, caractérisée en ce que l'axe longitudinal du panier de tamisage (65) est incliné jusqu'en direction du récipient collecteur d'impuretés (68).

4. Installation selon l'une des revendications 1 à 3, caractérisée en ce que la disposition est prévue de telle façon que le nettoyage de filtre puisse s'effectuer, en une seule fois ou par blocs, directement dans l'enceinte de machine à tamiser/filtre, pour permettre ainsi un fonctionnement continu.

5. Installation selon l'une des revendications 1 à 4, caractérisée en ce que le fond (67) de l'enceinte de machine à tamiser/filtre est fabriqué à partir d'un matériau poreux et est, d'une manière avantageuse, incliné.

6. Installation selon l'une des revendications 1 à 5, caractérisée en ce que des organes élémentaires, par exemple le réservoir à poudre (66), sont remplaçables, en particulier sans l'aide d'outils.

7. Installation selon l'une des revendications 1 à 6, caractérisée en ce que les moyens séparateurs de poudre (63, 70), y compris le ventilateur (64), sont conçus sous la forme d'une unité modulaire interchangeable en totalité, dont l'échange est prévu pour un changement de couleur de la poudre (figure 4).

8. Installation selon l'une des revendications 1 à 7, dans laquelle la cabine de revêtement (2) possède un dispositif (3) destiné à délivrer de la poudre chargée d'électricité statique, comportant une bande filtrante (5) disposée dans l'espace interne de la cabine (2) du côté du fond et apte à se déplacer à travers celle-ci, un premier ventilateur aspirant (35) raccordé par sa grande surface à proximité du fond de la cabine (2) et qui, par l'intermédiaire de la bande filtrante (5) produit une dépression dans toute la cabine (2), ainsi qu'une buse d'aspiration (13) associée à la bande filtrante (5) en vue d'expulser la poudre excédentaire présente sur la bande filtrante (5), caractérisée par des moyens d'actionnement (6a, 7a) en vue, lors d'un changement de couleur, de tirer la bande filtrante (5) arrêtée, sur une longueur de cabine au moins et d'attribuer ainsi à chaque couleur sa zone de bande filtrante.

9. Installation selon l'une des revendications 1 à 8, caractérisée en ce que la bande filtrante (5) comporte plusieurs zones successives, correspondant à la largeur de la cabine (2), dont chacune est associée à une couleur spécifique.

10. Installation selon l'une des revendications 1 à 9, caractérisée en ce que la buse d'aspiration (13) comporte un entraînement (14) en vue de se déplacer le long de la bande filtrante (5).

11. Installation selon l'une des revendications 1 à 10, caractérisée en ce que qu'il est prévu des moyens pour, pendant le fonctionnement de l'installation, mettre la buse d'aspiration (13) de celle-ci hors service.

12. Installation selon l'une des revendications 1 à 11, caractérisée en ce que, sous la bande filtrante (45) est disposée une nappe de fibres (50) apte, d'une manière avantageuse, à être enroulée et déroulée.

13. Installation selon l'une des revendications 1 à 12, caractérisée en ce que la bande filtrante (5) est conçue sous la forme d'une bande enroulée (6, 7) des deux côtés, à l'extérieur de l'enceinte de pulvérisation de la cabine (2), et apte à opérer un mouvement de va-et-vient.

FIG.1

0 141 778

FIG. 2

FIG. 3

11

FIG. 4

FIG.5